# EUROPEAN PATENT SPECIFICATION

(11) **EP 4 446 011 B1**
(45) Date of publication and mention of the grant of the patent: **11.11.2026**
(21) Application number: 22907212.9
(22) Date of filing: 30.11.2022
(51) Int. Cl.: B02C 15/04

(54) **GRINDING ROLLER, SOLID FUEL GRINDING DEVICE, AND GRINDING ROLLER PRODUCTION METHOD**
MAHLWALZE, FESTBRENNSTOFF-MAHLVORRICHTUNG UND MAHLWALZENHERSTELLUNGSVERFAHREN
ROULEAU DE BROYAGE, DISPOSITIF DE BROYAGE DE COMBUSTIBLE SOLIDE ET PROCÉDÉ DE PRODUCTION DE ROULEAU DE BROYAGE

(30) Priority: 15.12.2021 JP 2021203345
(43) Date of publication of application: 16.10.2024
(73) Proprietor: Mitsubishi Heavy Industries, Ltd., Tokyo 100-8332 (JP)
(72) Inventor: YAMAGUCHI, Sotaro, Tokyo 100-8332 (JP)
(74) Representative: Studio Torta S.p.A.
(86) International application number: PCT/JP2022/044261
(87) International publication number: WO 2023/112683

(56) References cited:
- EP-A1- 0 615 784
- JP-A- 2002 331 248
- JP-A- 2015 112 567
- JP-A- 2016 159 285
- JP-A- 2016 179 428
- JP-A- 2021 053 589
- JP-A- 2021 130 087
- JP-A- H11 309 596
- JP-A- S6 150 646
- JP-U- S59 138 444
- JP-U- S60 165 040

## Description

### [Technical Field]

The present disclosure relates to a pulverizing roller, a solid fuel pulverizing device, and a manufacturing method of a pulverizing roller.

### [Background Art]

Conventionally, solid fuel such as biomass fuel or coal is pulverized by a pulverizer (mill) into fine powder with particles within a predetermined particle diameter range and then supplied to a combustion device. Solid fuel is input to a pulverizing table, and the mill holds and pulverizes the solid fuel between the pulverizing table and a pulverizing roller. Out of the solid fuel pulverized into fine powder, pulverized fuel with particles within a predetermined particle diameter range is sorted by a classifier, carried to a boiler by a carrier gas (primary air) supplied from the outer circumference of the pulverizing table, and combusted by the combustion device. In a thermal power plant, steam is generated by heat exchange with a combustion gas generated by combustion of pulverized fuel in a boiler, a steam turbine is driven and rotated by the steam, a power generator connected to the steam turbine is driven and rotated, and thereby power is generated.

As pulverizing rollers provided to mills, ceramic-embedded pulverizing rollers are known in which ceramic with high wear resistance is embedded in portions that contact with solid fuel (for example, Japanese Patent Application Laid-Open No. 2020-11164). Such ceramic-embedded pulverizing rollers are superior in the wear resistance or the allowable wear amount compared to conventional pulverizing rollers, and a longer lifetime can be expected.

Japanese Patent Application Laid-Open No. 2020-11164 discloses a pulverizing roller including a base part made of high-chromium cast iron fitted to a journal housing and a hardened part partially containing a ceramic member provided to the outer circumferential face of the base part.

Other known systems are disclosed in patent publications EP0615784 A1, JPH11309596 A, or JP2002331248 A.

### [Summary of Invention]

### [Technical Problem]

When a ceramic-embedded pulverizing roller is manufactured, first, molten metal is poured into a mold with a ceramic block being installed at a predetermined position inside the mold. The metal in the mold is then cooled and solidified. In such a way, a ceramic-embedded pulverizing roller in which the ceramic part (portion containing ceramic) and the base part (portion not containing ceramic) are integrally fixed to each other is manufactured.

When the metal in the mold is cooled, there is a concern about damage due to thermal shrinkage. The ceramic part has a smaller linear expansion coefficient than the metal in the mold. Thus, the shrinkage factor of the ceramic part is smaller than the shrinkage factor of the base part during cooling. Therefore, the difference in the shrinkage amount between the ceramic part and the base part occurs during cooling. In this state, since the ceramic part and the base part are integrated to each other, the base part acts to cause the ceramic part to shrink, and the ceramic part acts to suppress the shrinkage of the base part. Thus, a thermal stress may act on the base part and the ceramic part, and this may cause damage to the pulverizing roller. As discussed above, the ceramic-embedded pulverizing roller may be damaged during manufacturing due to the difference in the linear expansion coefficient between the ceramic part and the base part. This may deteriorate the yield in manufacturing of pulverizing rollers.

Reduced rigidity of a member will allow the member to well expand. Thus, the stress that would occur against application of the same displacement is suppressed lower resulting in a smaller thermal stress. Therefore, to suppress the thermal stress of ceramic-embedded pulverizing rollers, it is conceivable to reduce the thickness of the ceramic part to reduce the rigidity of the ceramic part. If the thickness of the ceramic part is reduced, however, the wear resistance or allowable wear amount of a pulverizing roller is reduced, and this causes a problem of a shortened lifetime of the pulverizing roller.

In view of such circumstances, it has been desired to improve the yield in manufacturing of pulverizing rollers and enable a longer lifetime of the pulverizing rollers.

The present disclosure has been made in view of such circumstances and intends to provide a pulverizing roller, a solid fuel pulverizing device, and a manufacturing method of a pulverizing roller that can improve the yield in manufacturing of pulverizing rollers and increase the lifetime of the pulverizing rollers.

### [Solution to Problem]

The problem described above is solved by a pulverizing roller, a solid fuel pulverizing device, and a manufacturing method as claimed in the appended set of claims.

### [Advantageous Effects of Invention]

The yield in manufacturing of pulverizing rollers is improved, and the lifetime of the pulverizing rollers can be increased.

### [Brief Description of Drawings]

[Fig. 1] Fig. 1 is a configuration diagram illustrating a solid fuel pulverizing device and a boiler according to a first embodiment of the present disclosure.
[Fig. 2] Fig. 2 is a schematic side view of a pulverizing roller provided to the solid fuel pulverizing device according to the first embodiment of the present disclosure.
[Fig. 3] Fig. 3 is a sectional view of a primary part of the pulverizing roller according to the first embodiment of the present disclosure.
[Fig. 4] Fig. 4 is a sectional view of a primary part of the pulverizing roller according to the first embodiment of the present disclosure, which is a diagram illustrating a wear state of a roller part.
[Fig. 5] Fig. 5 is a schematic diagram illustrating a mold used for manufacturing the pulverizing roller according to the first embodiment of the present disclosure.
[Fig. 6] Fig. 6 is a diagram according to a modified example from Fig. 3.
[Fig. 7] Fig. 7 is a diagram according to a modified example from Fig. 3.
[Fig. 8] Fig. 8 is a diagram according to a modified example from Fig. 3.

### [Description of Embodiments]

One embodiment of a pulverizing roller, a solid fuel pulverizing device, and a manufacturing method of a pulverizing roller according to the present disclosure will be described below with reference to the drawings.

### [First Embodiment]

A first embodiment of the present disclosure will be described below with reference to the drawings. A power plant 1 according to the present embodiment includes a solid fuel pulverizing device 100 and a boiler 200.

In the following description, "above" represents a vertically upward direction, and "top" of a top part, a top face, or the like represents a vertically upper part. Further, similarly, "bottom" represents a vertically lower part, and "vertical direction" is not used in a strict sense and may includes an error.

The solid fuel pulverizing device 100 of the present embodiment is a device that pulverizes solid fuel such as biomass fuel or coal as an example and produces and supplies pulverized fuel to a burner (combustion device) 220 of the boiler 200.

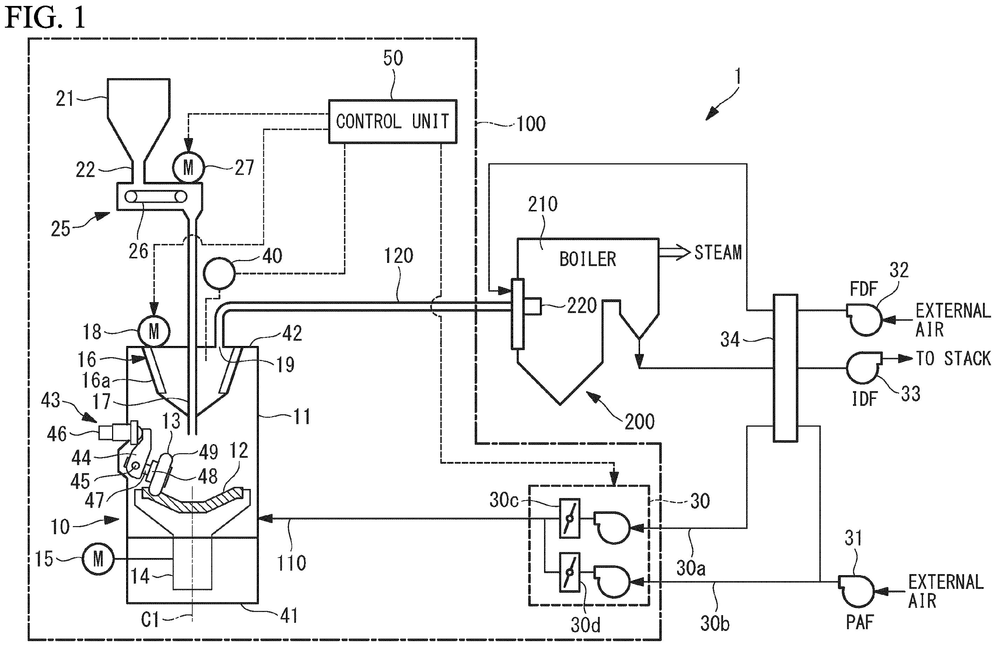

Although the power plant 1 including the solid fuel pulverizing device 100 and the boiler 200 illustrated in Fig. 1 has a single solid fuel pulverizing device 100, a system may be configured to have a plurality of solid fuel pulverizing devices 100 that correspond to a plurality of burners 220 of a single boiler 200, respectively.

The solid fuel pulverizing device 100 of the present embodiment includes a mill (pulverizing unit) 10, a bunker (storage unit) 21, a coal feeder (fuel feeder) 25, a fan unit (carrier gas supply unit) 30, a state detecting unit 40, and a control unit 50.

The mill 10 that pulverizes solid fuel such as coal or biomass fuel, which is to be supplied to the boiler 200, into pulverized fuel that is fine powder solid fuel may be of a form of pulverizing only coal, may be of a form of pulverizing only biomass fuel, or may be of a form of pulverizing biomass fuel together with coal.

Herein, the biomass fuel is an organic resource of renewable biological origin, for example, thinned wood, waste wood, driftwood, grasses, waste, sludge, tires, and recycle fuel (pellets or chips) or the like made therefrom, and is not limited to those presented here. Since the biomass fuel takes in carbon dioxide in a growth process of the biomass and thus serves as carbon neutral that does not emit carbon dioxide that becomes a greenhouse gas, various uses thereof have been studied.

The mill 10 includes a housing 11, a pulverizing table 12, a pulverizing roller 13, a gear (drive transmission unit) 14, a mill motor (drive unit) 15 connected to the gear 14 and configured to drive and rotate the pulverizing table 12, a rotary classifier (classifying unit) 16, a coal feed pipe (fuel feed unit) 17, and a classifier motor 18 configured to drive and rotate the rotary classifier 16.

The housing 11 is a casing that is formed in a cylindrical shape extending in the vertical direction and accommodates the pulverizing table 12, the pulverizing roller 13, the rotary classifier 16, and the coal feed pipe 17.

The coal feed pipe 17 is attached to the center of a ceiling 42 of the housing 11. The coal feed pipe 17 is to feed solid fuel guided from the bunker 21 via the coal feeder 25 into the housing 11 and is arranged vertically at the center position of the housing 11, and the bottom end thereof is provided extending into the housing 11.

The gear 14 is installed near a bottom face 41 of the housing 11, and the pulverizing table 12 configured to be rotated by drive force transmitted from the mill motor 15 connected to the gear 14 is arranged in a rotatable manner.

The pulverizing table 12 is a member that is circular in planar view, and the bottom end of the coal feed pipe 17 is arranged so as to face the pulverizing table 12. The top face of the pulverizing table 12 may have such a slope shape that is lower at the center and gradually becomes higher outward and have an outer circumferential part bent upward, for example. The coal feed pipe 17 feeds solid fuel (for example, coal or biomass fuel in the present embodiment) from above toward the pulverizing table 12 below, and the pulverizing table 12 holds and pulverizes the fed solid fuel between the pulverizing table 12 and the pulverizing roller 13.

Once solid fuel is input to the center of the pulverizing table 12 from the coal feed pipe 17, the solid fuel is guided to the outer circumferential side of the pulverizing table 12 by centrifugal force caused by rotation of the pulverizing table 12 and held and pulverized between the pulverizing table 12 and the pulverizing roller 13. The pulverized solid fuel is blown upward by a carrier gas (hereafter, referred to as primary air) guided from a carrier gas flow channel (hereafter, referred to as a primary air flow channel) 110 and guided to the rotary classifier 16.

The outer circumference of the pulverizing table 12 is provided with an air outlet (not illustrated) for causing primary air flowing in from the primary air flow channel 110 to flow out to the space above the pulverizing table 12 inside the housing 11. Swirl vanes (not illustrated) are installed to the air outlet and provide swivel force to the primary air blown out of the air outlet. The primary air provided with swivel force by the swirl vanes becomes an air flow having a swiveling velocity component and carries the solid fuel pulverized on the pulverizing table 12 to the rotary classifier 16 located above inside the housing 11. Note that, out of pulverized solid fuel, particles of solid fuel larger than a predetermined particle diameter are classified by the rotary classifier 16 or drop without reaching the rotary classifier 16, are returned to the pulverizing table 12, and are pulverized again between the pulverizing table 12 and the pulverizing roller 13.

The pulverizing roller 13 is a rotary body that pulverizes solid fuel fed from the coal feed pipe 17 to the pulverizing table 12. The pulverizing roller 13 is pressed against the top face of the pulverizing table 12 and cooperates with the pulverizing table 12 to pulverize solid fuel.

Although Fig. 1 illustrates only one pulverizing roller 13 as representative, a plurality of pulverizing rollers 13 are arranged circumferentially with equal intervals so as to press the top face of the pulverizing table 12. For example, three pulverizing rollers 13 are arranged circumferentially at equal intervals with angular intervals of 120 degrees on the outer circumferential part. In such a case, portions where the three pulverizing rollers 13 are in contact with the top face of the pulverizing table 12 (pressing portions) are at an equal distance from the rotation central axis of the pulverizing table 12.

The pulverizing roller 13 can be swung and displaced vertically by a journal head 43 and is supported so that the pulverizing roller 13 can come close to and separate away from the top face of the pulverizing table 12. When the pulverizing table 12 is rotated with the outer circumferential face of the pulverizing roller 13 being in contact with solid fuel on the top face of the pulverizing table 12, the pulverizing roller 13 is forced to rotate by being subjected to the rotational force from the pulverizing table 12. Once solid fuel is fed from the coal feed pipe 17, the solid fuel is pressed and pulverized between the pulverizing roller 13 and the pulverizing table 12. This pressing force is referred to as a pulverizing load.

A support arm 44 of the journal head 43 is supported with respect to the side face of the housing 11 by the support shaft 45 whose intermediate part runs horizontally so that the pulverizing roller 13 can be swung and displaced vertically about a support shaft 45. Further, the top end located on the vertically upper side of the support arm 44 is provided with a pressing device (pulverizing load application unit) 46. The pressing device 46 is fixed to the housing 11 and applies a pulverizing load to the pulverizing roller 13 via the support arm 44 and the like so as to press the pulverizing roller 13 against the pulverizing table 12. For example, the pulverizing load is provided by a hydraulic cylinder (not illustrated) activated by a pressure of a hydraulic oil supplied from the hydraulic device (not illustrated) installed outside the mill 10. Further, the pulverizing load may be provided by repulsive force of a spring (not illustrated).

The gear 14 is connected to the mill motor 15, transmits drive force of the mill motor 15 to the pulverizing table 12, and rotates the pulverizing table 12 about the central axis.

The rotary classifier (classifying unit) 16 is provided on the top of the housing 11 and has a hollow inverted conical external shape. The rotary classifier 16 has a plurality of blades 16a each extending vertically at the outer circumferential positions thereof. Each blade 16a is provided at a predetermined interval (equal interval) about the central axis of the rotary classifier 16.

The rotary classifier 16 is a device that classifies solid fuel pulverized by the pulverizing table 12 and the pulverizing roller 13 (hereafter, such pulverized solid fuel is referred to as "pulverized solid fuel") into particles of fuel that are larger than a predetermined particle diameter (for example, 70 to 100 µm for coal) (hereafter, pulverized solid fuel with particles exceeding a predetermined particle diameter is referred to as "coarse pulverized fuel") and particles of fuel that are smaller than or equal to the predetermined particle diameter (hereafter, pulverized solid fuel with particles smaller than or equal to a predetermined particle diameter is referred to as "pulverized fuel"). The rotary classifier 16 is provided with rotational drive force by the classifier motor 18 controlled by the control unit 50 and rotated around the coal feed pipe 17 about a circular cylindrical shaft (not illustrated) extending vertically with respect to the housing 11.

Note that a stationary classifier including a fixed casing with a hollow inverted conical shape and a plurality of stationary swirl vanes instead of the blades 16a at outer circumferential positions of the casing may be used as the classifying unit.

Pulverized solid fuel that has reached the rotary classifier 16 is classified such that, in accordance with relative balance between centrifugal force caused by rotation of the blades 16a and centripetal force caused by an air flow of the primary air, coarse pulverized fuel of a larger diameter is knocked off by the blades 16a and returned to and pulverized again by the pulverizing table 12, and pulverized fuel is guided to an outlet port 19 located in a ceiling 42 of the housing 11. The pulverized fuel classified by the rotary classifier 16 is discharged to a fine pulverized fuel supply flow channel (pulverized fuel supply pipe) 120 from the outlet port 19 together with the primary air and supplied to the burner 220 of the boiler 200.

The coal feed pipe (fuel feed unit) 17 is attached vertically so as to penetrate through the ceiling 42 of the housing 11 with the bottom end being provided extending into the housing 11 and feeds solid fuel input from above the coal feed pipe 17 to the center of the pulverizing table 12. A coal feeder 25 is connected to the top end of the coal feed pipe 17, and solid fuel is fed thereto.

The coal feeder 25 is connected to the bunker 21 via a downspout part 22 that is a pipe extending vertically from the bottom end of the bunker 21. A valve (a coal gate, not illustrated) for switching the discharge state of solid fuel from the bunker 21 may be provided on the way of the downspout part 22. The coal feeder 25 includes a transport unit 26 and a coal feeder motor 27. The transport unit 26 is, for example, a belt conveyer, which transports solid fuel discharged from the bottom end of the downspout part 22 to the top of the coal feed pipe 17 and inputs the solid fuel to inside thereof by drive force of the coal feeder motor 27. The feed amount of solid fuel fed to the mill 10 is controlled by a signal from the control unit 50 via adjustment of the moving speed of the belt conveyer of the transport unit 26, for example.

Typically, the inside of the mill 10 is supplied with the primary air for carrying pulverized fuel to the burner 220 and has a higher pressure than the coal feeder 25 or the bunker 21. Fuel is in a layered state inside the downspout part 22 connected between the bunker 21 and the coal feeder 25. This solid fuel layer serves to ensure a seal characteristic (material seal) for suppressing a reverse flow of the primary air and the pulverized fuel from the mill 10 to the bunker 21.

The fan unit 30 is a device that blows the primary air, which is for drying and carrying pulverized solid fuel to the rotary classifier 16, into the housing 11.

The fan unit 30 includes a primary air fan (PAF) 31, a hot gas flow channel 30a, a cold gas flow channel 30b, a hot gas damper 30c, and a cold gas damper 30d in the present embodiment in order to suitably adjust the flow rate and the temperature of the primary air blown into the housing 11.

In the present embodiment, the hot gas flow channel 30a supplies a part of air delivered from the primary air fan 31 as a hot gas that has passed through an air preheater (heat exchanger) 34 and thus has been heated. The hot gas damper 30c is provided to the hot gas flow channel 30a. The opening of the hot gas damper 30c is controlled by the control unit 50. The flow rate of the hot gas supplied from the hot gas flow channel 30a is determined by the opening of the hot gas damper 30c.

The cold gas flow channel 30b supplies a part of air delivered from the primary air fan 31 as a cold gas at normal temperature. The cold gas damper 30d is provided to the cold gas flow channel 30b. The opening of the cold gas damper 30d is controlled by the control unit 50. The flow rate of the cold gas supplied from the cold gas flow channel 30b is determined by the opening of the cold gas damper 30d.

In the present embodiment, the flow rate of the primary air is the total flow rate of the flow rate of a hot gas supplied from the hot gas flow channel 30a and the flow rate of a cold gas supplied from the cold gas flow channel 30b, and the temperature of the primary air is determined by a mixture ratio of the hot gas supplied from the hot gas flow channel 30a and the cold gas supplied from the cold gas flow channel 30b and is controlled by the control unit 50.

Further, for example, a part of a combustion gas discharged from the boiler 200 by a gas recirculation fan (not illustrated) may be guided to and mixed with the hot gas supplied from the hot gas flow channel 30a, and thereby the oxygen concentration of the primary air to be blown into the housing 11 from the primary air flow channel 110 may be adjusted. For example, when solid fuel with high ignitability (easy to ignite) is used, it is possible to suppress ignition of solid fuel in the path from the mill 10 to the burner 220 by adjusting the oxygen concentration of the primary air.

In the present embodiment, data measured or detected by the state detecting unit 40 of the mill 10 is transmitted to the control unit 50. For example, the state detecting unit 40 of the present embodiment is a differential pressure measuring unit, which measures, as the differential pressure in the mill 10, a differential pressure between the pressure at a portion where the primary air flows into the housing 11 from the primary air flow channel 110 and the pressure at the outlet port 19 where the primary air and the pulverized fuel are discharged to the pulverized fuel supply pipe 120 from inside of the housing 11. An increase and a decrease in this differential pressure in the mill 10 correspond to an increase and a decrease in a circulating amount of pulverized solid fuel circulating between a part near the rotary classifier 16 and a part near the pulverizing table 12 inside the housing 11 due to the classification effect of the rotary classifier 16. That is, since the amount and the particle diameter range of pulverized fuel discharged from the outlet port 19 can be adjusted by adjustment of the rotational number of the rotary classifier 16 in accordance with such a differential pressure in the mill 10, an amount of pulverized fuel corresponding to the feed amount of solid fuel to the mill 10 can be stably supplied to the burner 220 provided to the boiler 200 while the particle diameter of the pulverized fuel is maintained in a range that does not affect the combustibility of the solid fuel in the burner 220.

Further, for example, the state detecting unit 40 of the present embodiment is a temperature measuring unit, which determines the temperature of the primary air supplied into the housing 11 (mill inlet primary air temperature) or the temperature of a mixed gas of the primary air and pulverized fuel at the outlet port 19 (mill outlet primary air temperature) and controls the fan unit 30 so that respective upper limit temperatures are not exceeded. Each upper limit temperature is determined taking a possibility of ignition in accordance with characteristics of solid fuel or the like into consideration. Note that, since the primary air is cooled by being carried while drying pulverized solid fuel inside the housing 11, the primary air temperature at the mill inlet will range from normal temperature to about 300 degrees Celsius, for example, and the primary air temperature at the mill outlet will range from normal temperature to about 90 degrees Celsius, for example.

The control unit 50 is a device that controls each unit of the solid fuel pulverizing device 100.

For example, the control unit 50 may transfer a drive instruction to the mill motor 15 to control the rotational rate of the pulverizing table 12.

For example, the control unit 50 can control the rotational rate of the rotary classifier 16 to adjust the classification performance by transferring a drive instruction to the classifier motor 18 and stably supply, to the burner 220, an amount of pulverized fuel corresponding to the supply amount of solid fuel to the mill 10 while maintaining the particle diameter of the pulverized fuel in a range that does not affect the combustibility of the solid fuel in the burner 220.

Further, for example, the control unit 50 can adjust the feed amount (coal feed amount) of solid fuel to be fed to the mill 10 by transferring a drive instruction to the coal feeder motor 27.

Further, the control unit 50 can control the openings of the hot gas damper 30c and the cold gas damper 30d to adjust the flow rate and the temperature of the primary air by transferring an opening instruction to the fan unit 30. Specifically, the control unit 50 controls the openings of the hot gas damper 30c and the cold gas damper 30d so that the flow rate of the primary air to be supplied into the housing 11 and the temperature of the primary air at the outlet port 19 (mill outlet primary air temperature) are predetermined values set in association with a coal feed amount for each type of solid fuel. Note that the control of the temperature of the primary air may be performed on the temperature at the mill inlet (mill inlet primary air temperature).

For example, the control unit 50 is composed of a central processing unit (CPU), a random access memory (RAM), a read only memory (ROM), a computer readable storage medium, and the like. Further, a series of processes for implementing various functions are stored in a storage medium or the like in a form of a program as an example, and the various functions are implemented when the CPU loads such a program into the RAM or the like to perform modification or computation processing on information. Note that, for a program, a form in which the program is installed in advance in the ROM or another storage medium, a form in which the program is provided stored in a computer readable storage medium, a form in which the program is delivered via a wired or wireless communication connection, or the like may be applied. The computer readable storage medium may be a magnetic disk, a magneto-optical disk, a CD-ROM, a DVD-ROM, a semiconductor memory, a hard disk drive (HDD) or the like. Further, the HDD may be replaced with a solid state disk (SSD) or the like.

Next, the boiler 200 that generates steam by combustion of pulverized fuel supplied from the solid fuel pulverizing device 100 will be described. The boiler 200 includes a furnace 210 and the burner 220.

The burner 220 is a device that combusts pulverized fuel to form flame by using a mixed gas and secondary air, the mixed gas is a mixture of the pulverized fuel supplied from the pulverized fuel supply pipe 120 and the primary air, and the secondary air is supplied by using the air preheater 34 to heat air (external air) delivered from a forced draft fan (FDF) 32. Combustion of pulverized fuel takes place in the furnace 210, and the combustion gas at an elevated temperature is discharged to outside of the boiler 200 after passing through heat exchangers (not illustrated) such as an evaporator, a superheater, or an economizer.

The combustion gas discharged from the boiler 200 is subjected to predetermined treatment at an environmental device (a SCR (Selective Catalytic NOx Reduction) system, a dust collector, a desulfurizer, or the like, not illustrated), subjected to heat exchange with the primary air or the secondary air at the air preheater 34, guided to a stack (not illustrated) via an induced draft fan (IDF) 33, and released to the external air. The air heated by the combustion gas at the air preheater 34 and delivered from the primary air fan 31 is supplied to the hot gas flow channel 30a described above.

The feedwater to each heat exchanger of the boiler 200 is heated at an economizer (not illustrated) and then further heated by an evaporator (not illustrated) and a superheater (not illustrated), and thereby superheated steam at a high temperature and a high pressure is generated. The generated superheated steam is transferred to a steam turbine (not illustrated), which is a power generation unit, thereby the steam turbine is driven and rotated, the power generator (not illustrated) connected to the steam turbine is driven and rotated, and power is generated. Accordingly, the power plant 1 is configured.

Next, the pulverizing roller 13 according to the present embodiment will be described in detail with reference to Fig. 1 to Fig. 5.

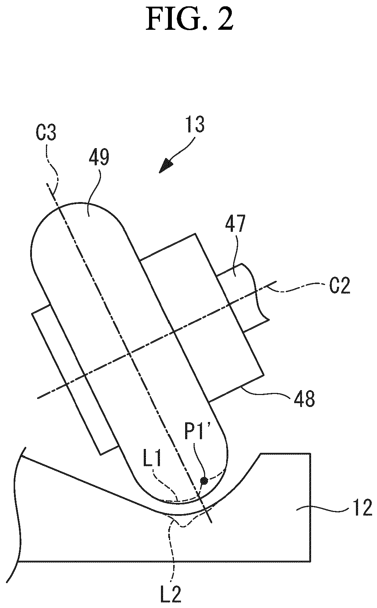

As illustrated in Fig. 1 and Fig. 2, each pulverizing roller 13 is supported rotatably about the rotation central axis C2 with respect to the housing 11 via the journal shaft 47, the journal head 43, and the support shaft 45. The journal shaft 47 extends inclined downward to the center side of the housing 11 from a part near the side face of the housing 11. The journal shaft 47 is fixed to the journal head 43 at the base end (the end on the side face side of the housing 11). Further, the pulverizing roller 13 is rotatably supported via a bearing (not illustrated) at the tip (the end on the center side of the mill 10) of the journal shaft 47. That is, the pulverizing roller 13 is rotatably supported vertically above the pulverizing table 12 and inclined such that the upper part thereof is located closer to the center side of the housing 11 than the lower part thereof.

As illustrated in Fig. 2, the pulverizing roller 13 has a journal housing (support part) 48 supported rotatably about the rotation central axis C2 at the tip of the journal shaft 47 and a substantially circular annular roller part 49 externally fitted to the journal housing 48. The journal housing 48 is provided so as to cover the tip of the journal shaft 47, and the outer circumferential face thereof is formed in a circular cylindrical shape.

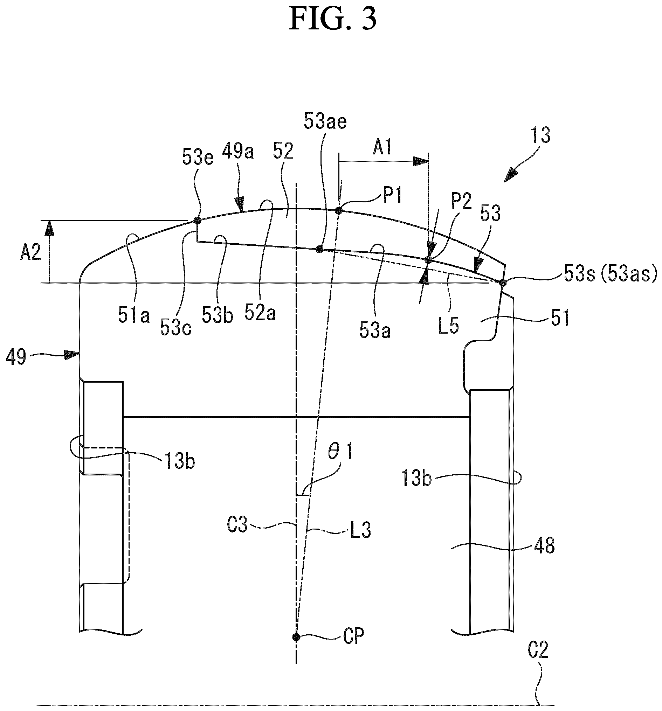

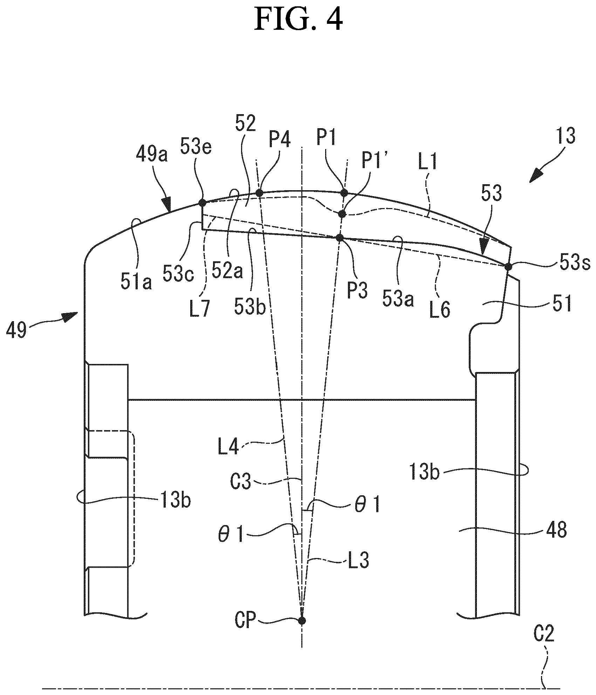

Fig. 3 and Fig. 4 illustrate a primary part of a cross section of the roller part 49 when taken along a plane including a direction in which the rotation central axis C2 of the roller part 49 extends (hereafter, referred to as "axis direction cross section").

As illustrated in Fig. 3 and Fig. 4, the roller part 49 has a base part 51 made of high-chromium cast ion fitted to the journal housing 48 and a ceramic part (outer circumferential part) 52 partially including a ceramic member provided to the outer circumferential face 51a of the base part 51. That is, the roller part 49 according to the present embodiment is a so-called ceramic-embedded high-chromium cast iron roller.

The roller part 49 has a substantially circular annular outer circumferential face 49a and a substantially circular cylindrical inner circumferential face. The outer circumferential face 49a and the inner circumferential face are connected to each other via end faces. The outer circumferential face 49a of the roller part 49 is curved arcuate about the center point CP in the axis direction cross section. The outer circumferential face 49a of the roller part 49 forms a straight line parallel to the rotation central axis C2 in the axis direction cross section.

The base part 51 is supported by the journal housing 48. The base part 51 is formed in a substantially circular annular shape. Further, the base part 51 is fitted to the journal housing 48 such that the inner circumferential face of the base part 51 is in contact with the outer circumferential face of the journal housing 48. The ceramic part 52 is fixed to the outer circumferential part of the circular annular base part 51. The ceramic part 52 is provided over substantially the entire circumferential range of the base part 51. That is, the ceramic part 52 is formed in a substantially circular annular shape. The ceramic part 52 does not cover the entire region of the outer circumferential face 51a of the base part 51 but covers the base end side of the roller part 49 out of the outer circumferential face 51a of the base part 51. Herein, the base end side refers to the journal shaft 47 side to which the pulverizing roller 13 is connected, and represents the outer circumferential side in the radial direction of the pulverizing table 12. The tip side represents the rotation central axis C1 (see Fig. 1) side in the radial direction of the pulverizing table 12. That is, the outer circumferential face 49a (the face to pulverize solid fuel) of the roller part 49 has the base end side formed of the outer circumferential face 52a of the ceramic part 52 and has the tip side (opposite to the base end side) formed of the outer circumferential face 51a of the base part 51.

The ceramic part 52 includes the ceramic member and thus has a smaller linear expansion coefficient than the base part 51 made of high-chromium cast iron. Further, the ceramic part 52 has higher wear resistance than the base part 51. The materials of the base part 51 and the ceramic part 52 are not limited to the materials described above.

The dashed lines L1 in Fig. 2 and Fig. 4 represents the development state of wear of the roller part 49 that develops as the mill 10 pulverizes solid fuel. That is, in the example in the present embodiment, the roller part 49 is in a condition where a portion P1 on the base end side (that is, opposite to the tip end side) of the roller part 49 (hereafter, referred to as "maximum wear point P1") is more worn than the remaining portion. As described above, the base end side represents the outer circumferential side in the radial direction of the pulverizing table 12, and the tip side represents the rotation central axis C1 (see Fig. 1) side of the pulverizing table 12. Further, the dashed line L2 of Fig. 2 represents the development state of wear of the pulverizing table 12. Note that, in Fig. 2, Fig. 4, and the like, the maximum wear point before wear occurs is denoted by a reference "P1", and the maximum wear point after wear has actually developed is denoted by a reference "P1'". In other words, the maximum wear point P1 before wear occurs is a point where wear is expected to be most likely to develop.

The maximum wear point P1 is a position on the outer circumferential face 49a of the roller part 49 at which a line connecting the position to the center point CP forms a predetermined angle θ1 on the base end side relative to the center line C3, which is a line being orthogonal to the rotation central axis C2 and passing through the center in the direction in which the rotation central axis C2 extends. In detail, the maximum wear point P1 is a position at which the line L3 forming the predetermined angle θ1 relative to the center line C3 and the outer circumferential face 49a intersect with each other. Although the angle θ1 is 8 degrees in the present embodiment, the angle θ1 is not limited to 8 degrees. The angle θ1 can be within a range from 3 degrees to 13 degrees (a range of 8 degrees plus or minus 5 degrees).

Further, in the present embodiment, the ceramic part 52 in the axis direction cross section is thickest in the portion through which the line L3 forming the predetermined angle θ1 relative to the center line C3 passes.

Next, an interface 53 between the base part 51 and the ceramic part 52 in the axis direction cross section will be described. The interface 53 is formed of a plane at which the outer circumferential face 51a of the base part 51 and the inner face of the ceramic part 52 are in contact with each other. The interface 53 has substantially the same shape in the circumferentially entire region, that is, in any axis direction cross section.

As illustrated in Fig. 3, the interface 53 has a curved part 53a located on the end face 13b side (the base end side) from the maximum wear point P1, which is most likely to be worn, of the outer circumferential face 49a of the roller part 49 and curved protruding toward the outer circumferential face 49a of the roller part 49. In other words, the curved part 53a is curved to reduce the thickness of the ceramic part 52.

When the point P2 is defined as the point at which the distance from a straight line connecting a start point 53as of the curved part 53a and an end point 53ae of the curved part 53a (two-dot chain line L5 in Fig. 3) to the curved part 53a is the longest (in other words, the point at which the thickness of the ceramic part 52 is reduced the most due to the curved part 53a being provided), the curved part 53a is curved such that the point P2 is located on the end face 13b side (the base end side) from the maximum wear point P1 of the roller part 49, where this end face 13b is the closer one of the end faces 13b to the maximum wear point P1. That is, in the present embodiment, as illustrated in Fig. 3, the point P2 is located closer to the end face 13b side (the base end side) than the point P1 by a length A1.

Further, the radius of curvature of the curved part 53a is, for example, 10% or greater of the radius of curvature of the outer circumferential face 49a of the roller part 49 (the curvature of the curved part 53a is about 10 times or less than the curvature of the outer circumferential face 49a).

Further, the interface 53 has a straight part 53b connected to the end of the tip side of the curved part 53a and extending straight and a bent part 53c bent and extending from the end on the tip side of the straight part 53b in the direction of the outer circumferential face 49a. The straight part 53b and the curved part 53a are connected smoothly to each other. The expression of "connected smoothly" means that the straight part 53b and the curved part 53a are connected to each other such that there is no step or the like in the connecting portion therebetween.

Further, the interface 53 has a start point 53s that is the end on the end face 13b side (base end side) and an end point 53e that is the opposite end thereto, and the end point 53e is located closer to the outer circumferential face 49a side of the roller part 49 than the start point 53s. That is, in the present embodiment, as illustrated in Fig. 3, the end point 53e is located closer to the outer circumferential face 49a side than the start point 53s by a length A2.

Note that the start point 53s of the interface 53 is determined by the floating force of a ceramic block CB (ceramic part 52) during manufacturing of the roller part 49 described later.

Further, as illustrated in Fig. 4, the curved part 53a is located closer to the outer circumferential face 49a side than a line (the dashed line L6 in Fig. 4) connecting the start point 53s and a point (hereafter, referred to as "intersection point P3") at which the line L3 (the line forming the predetermined angle θ1 relative to the center line C3) and the interface 53 intersect with each other. That is, compared to a case where the interface 53 is the dashed line L6, the thickness of the ceramic part 52 is smaller on the base end side (the start point 53s side) than at the intersection point P3.

Further, on the tip side (the end point 53e side) from at the intersection point P3, the interface 53 is located closer to the journal housing 48 side than the extension line (the dashed line L7) of the dashed line L6. That is, compared to a case where the interface 53 is the dashed line L7, the thickness of the ceramic part 52 is larger on the tip side (the end point 53e side) than at the intersection point P3.

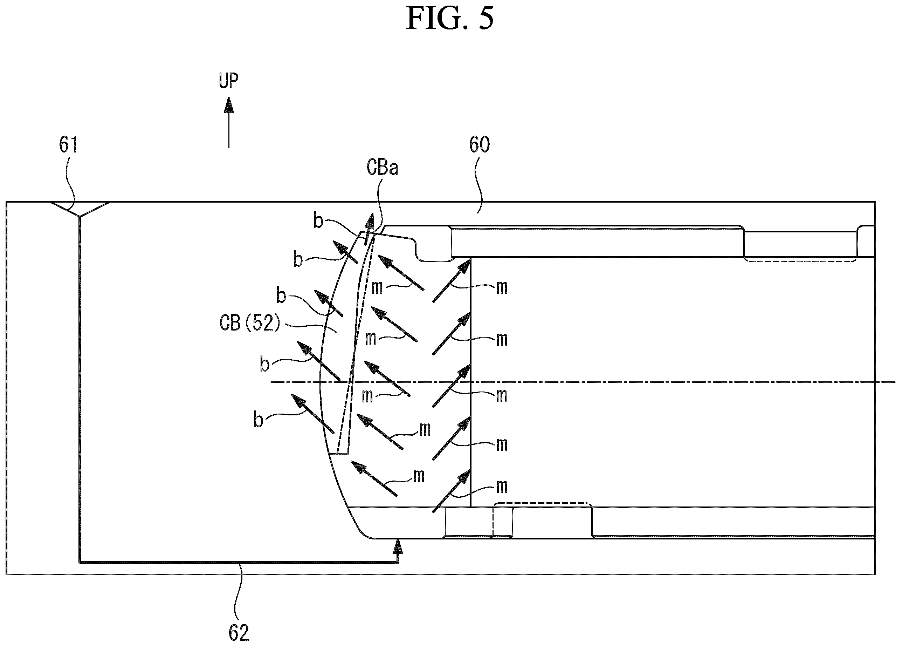

Next, a method of manufacturing the roller part 49 will be described with reference to Fig. 5. The reference "UP" in Fig. 5 represents "above" in the vertical direction.

First, ceramic particles are shaped into a block shape (a shape corresponding to the ceramic part 52) to manufacture the ceramic block CB (see Fig. 5) forming a part of the ceramic part 52. The ceramic block CB is made of bound particulate ceramics, and a relatively large number of voids are formed between ceramic particles. The shape of the outer circumferential face of the ceramic block CB is substantially the same as the shape of the outer circumferential face 52a of the ceramic part 52 (see Fig. 4 and the like).

Next, the manufactured ceramic block CB is installed at a predetermined position in a mold 60. Next, molten metal is poured into the mold 60 from a sprue 61 through a runner 62. Accordingly, the molten metal is filled in the mold 60 (see arrows m). In this state, the ceramic block CB has a smaller specific gravity than the molten metal and thus is pressed against predetermined positions on the inner circumferential face of the mold 60 by the floating force (see arrows b), as illustrated in Fig. 5. In detail, the top face CBa of the ceramic block CB (the face corresponding to the end face on the base end side of the ceramic part 52) is pressed against the ceiling face of the mold 60, and the ceramic block CB is supported by the mold 60 by the top face CBa. Further, in this state, the molten metal flows into the voids formed between the ceramic particles inside the ceramic block CB.

Next, the molten metal is cooled and solidified. Accordingly, the roller part 49 is completed in which the ceramic part 52, in which metal has entered the voids between the ceramic particles inside the ceramic block CB and which is superior in wear resistance, and the base part 51, which is formed of only the solidified metal, are integrated with each other.

In such a way, the roller part 49 of the present embodiment is manufactured by inserting the base part 51 and the ceramic part 52 into each other.

According to the present embodiment, the following effects and advantages are achieved.

In the present embodiment, the interface 53 between the base part 51 and the ceramic part 52 in the axis direction cross section of the roller part 49 has a curved part 53a curved protruding toward the outer circumferential face 49a of the roller part 49 on the end face side (the base end side) from the maximum wear point P1.

Accordingly, the thickness of the ceramic part 52 is reduced as far as the inner circumferential face thereof is the curved part 53a. Therefore, the rigidity of the ceramic part 52 can be reduced. Thus, the thermal stress of the base part 51 and the ceramic part 52 against each other is more likely to be absorbed by the ceramic part 52, and this can suppress damage to the ceramic part 52 due to the difference in the linear expansion coefficient therebetween. Thus, the yield in manufacturing of the pulverizing rollers 13 can be improved, and therefore the manufacturing cost can be reduced.

On the other hand, since the thickness of the ceramic part 52 is not reduced at the maximum wear point P1, the wear resistance of the pulverizing roller 13 can be maintained. It is therefore possible to suppress a reduction in the lifetime of the pulverizing roller 13 from occurring and increase the lifetime of the pulverizing roller 13.

As described above, in the present embodiment, the yield in manufacturing of the pulverizing rollers 13 can be improved, and the lifetime of the pulverizing rollers 13 can be increased.

Further, in the present embodiment, the interface 53 has the straight part 53b. This makes it easier to manufacture the roller part 49 compared to a configuration in which the whole interface 53 is the curved part 53a. The advantage will be described in detail. The ceramic block CB is manufactured by casting. Thus, when the curved part 53a is provided, it is required to cut the portion corresponding to the curved part 53a into a curved surface in the die used for the ceramic block CB. However, cutting into a curved surface involves difficult cutting work compared to a case of cutting into a planar surface. Therefore, in the present embodiment, since the portion to be cut into a curved surface can be reduced compared to the configuration in which the whole interface 53 is the curved part 53a, manufacturing of the ceramic block CB can be facilitated. Thus, manufacturing of the roller part 49 can be facilitated.

Further, in the present embodiment, the straight part 53b and the curved part 53a are connected smoothly to each other. Accordingly, when a thermal stress acts on the base part 51 and the ceramic part 52, stress concentration can be less likely to occur. Therefore, damage to the ceramic part 52 due to the difference in the linear expansion coefficient from the base part 51 can be suppressed.

Note that the expression of "connected smoothly" means that the straight part 53b and the curved part 53a are connected to each other such that there is no step or the like in the connecting portion therebetween.

An excessively smaller radius of curvature of the curved part 53a may cause stress concentration in the curved part 53a, and this may cause a starting point of damage due to the thermal stress.

In contrast, in the present embodiment, the radius of curvature of the curved part 53a is, for example, 10% or greater of the radius of curvature of the outer circumferential face 49a of the roller part 49. This can prevent an excessively small radius of curvature of the curved part 53a and make the stress concentration less likely to occur. Therefore, damage to the ceramic part 52 due to the difference in the linear expansion coefficient can be suppressed.

Further, the roller part 49 may be used inverted after wear of the roller part 49 has developed. That is, the roller part 49 may be once detached from the journal housing 48, and the roller part 49 may be inverted to exchange the base end side with the tip side and then attached to the journal housing 48 and used again. In such a case, the maximum wear point is positioned line-symmetrically with respect to the center line C3. In detail, as illustrated in Fig. 4, the maximum wear point is the point P4 at which the line L4, which is a line line-symmetrical to the line L3 forming the predetermined angle θ1 relative to the center line C3, and the outer circumferential face 49a of the roller part 49 intersect with each other.

In the present embodiment, on the tip side (the end point 53e side) from at the intersection point P3, the interface 53 is located closer to the journal housing 48 side than the extension line (the dashed line L7) of the dashed line L6. That is, compared to a case where the interface 53 is the dashed line L7, the thickness of the ceramic part 52 is larger on the tip side (the end point 53e side) than at the intersection point P3. Accordingly, even when the roller part 49 is inverted and used, since the ceramic layer thickness at the maximum wear point (point P4) can be increased, the lifetime of the pulverizing roller 13 can be further increased.

Further, when the roller part 49 is attached to the journal housing 48, the roller part 49 may be heated and shrink-fitted to the journal housing 48. In this step, a thermal stress occurs inside the roller part 49. In the present embodiment, however, since the thermal stress of the base part 51 and the ceramic part 52 against each other is more likely to be absorbed by the ceramic part 52 as described above, damage to the ceramic part 52 due to the difference in the linear expansion coefficient from the base part 51 can be suppressed.

Further, when the roller part 49 is detached from the journal housing 48, the roller part 49 may be heated for easier detachment. Also in this step, a thermal stress occurs inside the roller part 49. In the present embodiment, however, since such a thermal stress of the base part 51 and the ceramic part 52 against each other is more likely to be absorbed by the ceramic part 52 as described above, damage to the ceramic part 52 due to the difference in the linear expansion coefficient from the base part 51 can be suppressed.

As described above, in the present embodiment, also during attachment or replacement of the roller part 49, handling thereof can be facilitated.

Note that the present disclosure is not limited to the embodiment described above, and suitable modification is possible within the scope as defined in the appended set of claims.

For example, the solid fuel to be used is not limited to the present disclosure, and coal, biomass fuel, petroleum coke (PC), or the like can be used. Furthermore, these types of solid fuel can be used in combination.

Further, the shape of the interface is not limited to the shape of the embodiment described above and may be the following shapes, for example.

### [Modified Example 1]

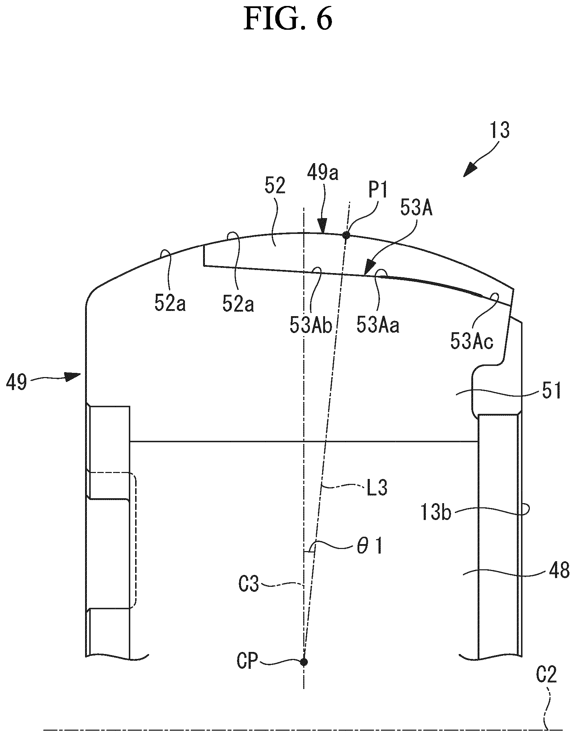

Modified example 1 will be described with reference to Fig. 6.

An interface 53A of the present embodiment has a curved part 53Aa interposed between two straight parts (a straight part 53Ab and a straight part 53Ac). The curved part 53Aa and the straight part 53Ab are connected smoothly to each other. Further, the curved part 53Aa and the straight part 53Ac are also connected smoothly to each other. The curved part 53Aa is located on the end face side (base end side) from the maximum wear point P1 and curved protruding toward the outer circumferential face 49a side of the roller part 49 in the same manner as the curved part 53a of the first embodiment.

The same advantages as those in the embodiment described above are achieved also in such a form. Further, in the present form, since the length of the curved part 53Aa can be shorter than that in the embodiment described above, manufacturing of the roller part 49 can be further facilitated. In addition, in the present form, it is easy to increase the length of the ceramic part 52 exposed in the end face on the base end side of the roller part 49. Therefore, when the ceramic block CB is subjected to floating force during roller casting, the area of the face contacting with the mold 60 and supporting the floating force is increased. Thus, the risk of a ceramic block CB falling over inside the mold 60 during roller casting can be reduced, and this enables further improvement in the yield.

### [Modified Example 2]

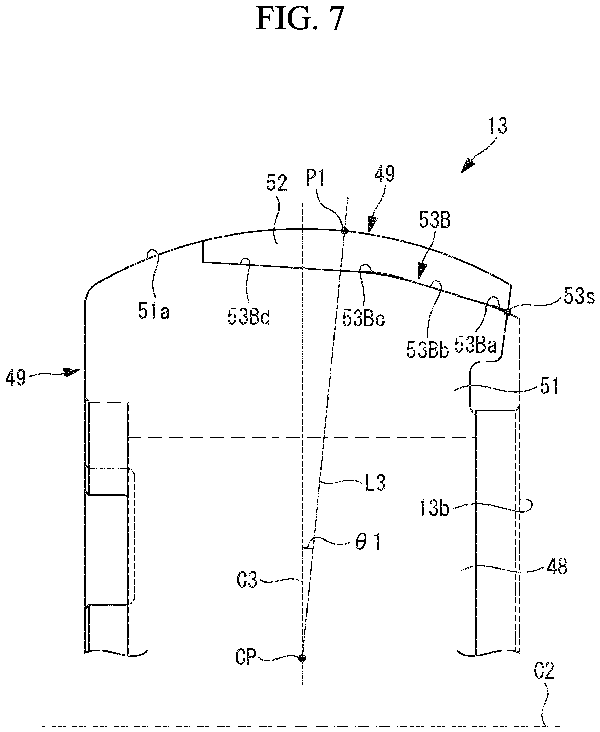

Next, Modified example 2 will be described with reference to Fig. 7.

An interface 53B of the present embodiment has a first curved part 53Ba, a first straight part 53Bb, a second curved part 53Bc, and a second straight part 53Bd in this order from the start point 53s. Adjacent parts are connected smoothly to each other. The first curved part 53Ba and the second curved part 53Bc are located on the end face side from the maximum wear point P1 and curved protruding toward the outer circumferential face 49a side of the roller part 49 in the same manner as the curved part 53a of the first embodiment.

The same advantages as those in the embodiment described above are achieved also in such a form. Further, in the present form, since the length of the curved part 53Aa can be much shorter than that in the embodiment described above, manufacturing of the roller part 49 can be further facilitated. In addition, in the present form, since the curved part is distributed into two portions of the first curved part 53Ba and the second curved part 53Bc, stress concentration occurring in each curved part can also be distributed. Thus, damage to the ceramic part 52 due to the difference in the linear expansion coefficient during casting can be suppressed more effectively. The curved part can be provided to a portion closer to the base end part, and it is possible to increase the area of the face contacting with the mold 60 and supporting floating force when the ceramic block CB is subjected to the floating force during roller casting while suppressing the thickness of the ceramic block CB at a position close to the base end part. Thus, the risk of a ceramic block CB falling over inside the mold 60 during roller casting can be reduced, and this enables further improvement in the yield and reduction in costs.

### [Modified Example 3]

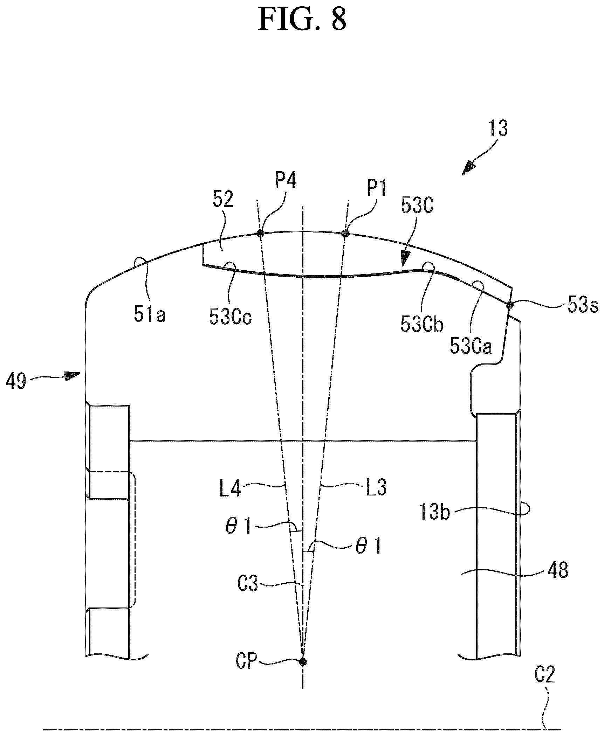

Next, Modified example 3 for the present embodiment will be described with reference to Fig. 8.

An interface 53C of the present embodiment has a straight part 53Ca, a curved part 53Cb, and a recess part 53Cc in this order from the start point 53s. Adjacent parts are connected smoothly to each other. The curved part 53Cb is located on the end face side from the maximum wear point P1 and curved protruding toward the outer circumferential face 49a side of the roller part 49 in the same manner as the curved part 53a of the first embodiment. The recess part 53Cc is curved away from the outer circumferential face 49a of the roller part 49.

The same advantages as those in the embodiment described above are achieved also in such a form. Further, since the recess part 53Cc is provided, the thickness of the ceramic layer at the maximum wear point (the point P1 and point P4) can be larger. Thus, the lifetime of the pulverizing roller 13 can be increased.

### List of advantages

In the the disclosed pulverizing roller, the interface between the base part and the outer circumferential part in the cross section taken along the plane including the direction in which the rotation central axis of the roller part extends (hereafter, referred to as "axis direction cross section") has the curved part curved protruding toward the outer circumferential face of the roller part on the end face side from the maximum wear point. Accordingly, the thickness of the outer circumferential part is smaller in the curved part. Therefore, the rigidity of the outer circumferential part can be reduced. Thus, the thermal stress of the base part and the outer circumferential part against each other is more likely to be absorbed by the outer circumferential part, and this can suppress damage to the outer circumferential part due to the difference in the linear expansion coefficient from the base part. Thus, the yield in manufacturing of the pulverizing rollers can be improved, and therefore the manufacturing cost can be reduced.

On the other hand, since the thickness of the outer circumferential part is not reduced at the maximum wear point, the wear resistance of the pulverizing roller can be maintained. It is therefore possible to suppress a reduction in the lifetime of the pulverizing roller from occurring and increase the lifetime of the pulverizing roller.

As described above, the yield in manufacturing of the pulverizing rollers can be improved, and the lifetime of the pulverizing rollers can be increased.

Note that an example of the material of the base part may be, for example, a metal (more specifically, for example, high-chromium cast ion). Further, an example of the material of the outer circumferential part may be, for example, a material containing ceramic.

Moreover, since the thickness of the outer circumferential part is not reduced at the maximum wear point, the wear resistance of the pulverizing roller can be maintained. It is therefore possible to suppress a reduction in the lifetime of the pulverizing roller from occurring and increase the lifetime of the pulverizing roller.

In detail, the interface has a straight part. This enables easier manufacturing of the roller part compared to a configuration in which the whole interface is the curved part. That is, for example, when the outer circumferential part is manufactured by casting, it is required to cut the portion corresponding to the curved part into a curved surface in the die used for manufacturing the outer circumferential part. However, cutting into a curved surface involves difficult cutting work compared to a case of cutting into a planar surface. Therefore, since the portion to be cut into a curved surface can be reduced compared to the configuration in which the whole interface is the curved part, manufacturing of the outer circumferential part can be facilitated. Thus, manufacturing of the roller part can be facilitated.

Further, the straight part and the curved part are connected smoothly to each other. Accordingly, when a thermal stress acts on the base part and the outer circumferential part, stress concentration can be less likely to occur. Therefore, damage to the outer circumferential part due to the difference in the linear expansion coefficient from the base part can be suppressed.

Note that the expression of "connected smoothly" means that the straight part and the curved part are connected to each other such that there is no step or the like in the connecting portion therebetween.

Moreover, the recess part and the curved part are connected smoothly to each other. Accordingly, when a thermal stress acts on the base part and the outer circumferential part, stress concentration can be less likely to occur. Therefore, damage to the outer circumferential part due to the difference in the linear expansion coefficient from the base part can be suppressed.

Note that the expression of "connected smoothly" means that the recess part and the curved part are connected to each other such that there is no step or the like in the connecting portion therebetween. Further, since the thickness of the ceramic layer at the maximum wear point can be larger, the lifetime of the pulverizing roller can be increased.

In addition, an excessively smaller radius of curvature of the curved part may cause stress concentration in the curved part, and this may cause a starting point of damage due to the thermal stress.

In contrast, as described, the radius of curvature of the curved part is 10% or greater of the radius of curvature of the outer circumferential face. This can prevent an excessively small radius of curvature of the curved part and make the stress concentration less likely to occur. Therefore, damage to the outer circumferential part due to the difference in the linear expansion coefficient from the base part can be suppressed.

### [Reference Signs List]

1 power plant
10 mill
11 housing
12 pulverizing table
13 pulverizing roller
13b end face
14 gear
15 mill motor
16 rotary classifier
16a blade
17 coal feed pipe
18 classifier motor
19 outlet port
21 bunker
22 downspout part
25 coal feeder
26 transport unit
27 coal feeder motor
30 fan unit
30a hot gas flow channel
30b cold gas flow channel
30c hot gas damper
30d cold gas damper
31 primary air fan
34 air preheater
40 state detecting unit
41 bottom face
42 ceiling
43 journal head
44 support arm
45 support shaft
46 pressing device
47 journal shaft
48 journal housing (support part)
49 roller part
49a outer circumferential face
50 control unit
51 base part
51a outer circumferential face
52 ceramic part (outer circumferential part)
52a outer circumferential face
53 interface
53A interface
53Aa curved part
53Ab straight part
53Ac straight part
53B interface
53Ba first curved part
53Bb first straight part
53Bc second curved part
53Bd second straight part
53C interface
53Cb curved part
53Cc recess part
53a curved part
53ae end point
53as start point
53b straight part
53c bent part
53e end point
53s start point
60 mold
61 sprue
62 runner
100 solid fuel pulverizing device
110 primary air flow channel
120 pulverized fuel supply pipe
200 boiler
210 furnace
220 burner

## Claims

1. A pulverizing roller (13) accommodated in a housing (11) and configured to hold solid fuel between a rotating pulverizing table (12) and the pulverizing roller (13) to pulverize the solid fuel, the pulverizing roller (13) being forced to rotate by being subjected to rotational force from the pulverizing table (12), the pulverizing roller (13) comprising:
a support part (48) rotatably supported with respect to the housing (11); and
a circular annular roller part (49) fixed to the support part (48) and configured to pulverize solid fuel between the pulverizing table (12) and the roller part (49),
wherein the roller part (49) has a base part (51) fixed to the support part (48) and an outer circumferential part (52) provided to an outer circumferential face of the base part (51), having a different linear expansion coefficient from the base part (51), and having higher wear resistance than the base part (51), and an interface (53) between the base part (51) and the outer circumferential part (52) in a cross section taken along a plane including a direction in which a rotation central axis (C2) of the roller part (49) extends has a curved part (53a) curved protruding toward an outer circumferential face of the roller part (49) on an end face side from a maximum wear point of the outer circumferential face of the roller part (49), the maximum wear point being most likely to be worn, and the end face being one of both end faces of the pulverizing roller (13) and being the closer to the maximum wear point,
**characterized in that** the interface (53) has a straight part (53b) extending straight, and
wherein the straight part (53b) and the curved part (53a) are connected smoothly to each other.

2. The pulverizing roller (13) according to claim 1,
wherein the outer circumferential face of the roller part (49) is arcuate in the cross section, and
wherein the maximum wear point is located on the outer circumferential face at an angle ranging from 3 degrees to 13 degrees relative to a center line, the center line being orthogonal to the rotation central axis and passing through the center in a direction in which the rotation central axis extends.

3. The pulverizing roller (13) according to claim 1 or 2,
wherein the interface (53) has a recess part (53Cc) recessed away from the outer circumferential face of the roller part (49) at the maximum wear point, and
wherein the recess part (53Cc) and the curved part (53a) are connected smoothly to each other.

4. The pulverizing roller (13) according to any one of claims 1 to 3,
wherein the outer circumferential face of the roller part (49) is arcuate in the cross section, and
wherein the radius of curvature of the curved part is 10% or greater of the radius of curvature of the outer circumferential face.

5. A solid fuel pulverizing device comprising:
the pulverizing roller (13) according to any one of claims 1 to 4;
a pulverizing table (12) configured to rotate and hold solid fuel between the pulverizing roller (13) and the pulverizing table (12) to pulverize the solid fuel; and
a housing (11) accommodating the pulverizing roller (13) and the pulverizing table (12).

6. A manufacturing method of a pulverizing roller (13) accommodated in a housing (11) and configured to hold solid fuel between a rotating pulverizing table (12) and the pulverizing roller (13) to pulverize the solid fuel, the pulverizing roller (13) being forced to rotate by being subjected to rotational force from the pulverizing table (12), wherein the pulverizing roller (13) comprises
a support part (48) rotatably supported with respect to the housing (11), and
a circular annular roller part (49) fixed to the support part (48) and configured to pulverize solid fuel between the pulverizing table (12) and the roller part (49),
wherein the roller part (49) has a base part (51) fixed to the support part (48) and an outer circumferential part (52) provided to an outer circumferential face of the base part (51), having a different linear expansion coefficient from the base part (51), and having higher wear resistance than the base part (51), and an interface (35) between the base part (51) and the outer circumferential part (52) in a cross section taken along a plane including a direction in which a rotation central axis of the roller part (49) extends has a curved part curved protruding toward an outer circumferential face of the roller part (49) on an end face side from a maximum wear point of the outer circumferential face of the roller part (49), the maximum wear point being most likely to be worn, and the end face being one of both end faces of the pulverizing roller and being the closer to the maximum wear point,
**characterized in that** the interface (53) has a straight part (53b) extending straight, and
wherein the straight part (53b) and the curved part (53a) are connected smoothly to each other,
the manufacturing method comprising integrally molding the base part (51) and the outer circumferential part (52) by casting.

## Patentansprüche

1. Pulverisierungswalze (13), die in einem Gehäuse (11) untergebracht und so ausgelegt ist, dass sie festen Brennstoff zwischen einem rotierenden Pulverisierungstisch (12) und der Pulverisierungswalze (13) hält, um den festen Brennstoff zu pulverisieren, wobei die Pulverisierungswalze (13) durch die Einwirkung einer Drehkraft seitens des Pulverisierungstischs (12) zur Drehung gezwungen wird, wobei die Pulverisierungswalze (13) Folgendes umfasst:
einen Stützabschnitt (48), der in Bezug auf das Gehäuse (11) drehbar gestützt ist, und einen runden ringförmigen Walzenabschnitt (49), der an dem Stützabschnitt (48) befestigt und so ausgelegt ist, dass er festen Brennstoff zwischen dem Pulverisierungstisch (12) und dem Walzenabschnitt (49) pulverisiert,
wobei der Walzenabschnitt (49) einen an dem Stützabschnitt (48) befestigten Basisabschnitt (51) und einen an einer Außenumfangsfläche des Basisabschnitts (51) vorgesehenen Außenumfangsabschnitt (52) aufweist, aufweisend einen von dem Basisabschnitt (51) verschiedenen linearen Ausdehnungskoeffizienten und
aufweisend eine höhere Verschleißfestigkeit als der Basisabschnitt (51), und wobei eine Grenzfläche (53) zwischen dem Basisabschnitt (51) und dem Außenumfangsabschnitt (52) in einem Querschnitt entlang einer Ebene, die eine Erstreckungsrichtung einer Rotationsmittelachse (C2) des Walzenabschnitts (49) enthält, einen gekrümmten Abschnitt (53a) aufweist, der zu einer Außenumfangsfläche des Walzenabschnitts (49) hin vorspringend gekrümmt ist, und zwar auf einer Stirnflächenseite von einem maximalen Verschleißpunkt der Außenumfangsfläche des Walzenabschnitts (49) aus, wobei der maximale Verschleißpunkt der am wahrscheinlichsten verschleißende Punkt ist und die Stirnfläche eine von beiden Stirnflächen der Pulverisierungswalze (13) ist und diejenige ist, die dem maximalen Verschleißpunkt näher liegt,
**dadurch gekennzeichnet, dass** die Grenzfläche (53) einen geraden Abschnitt (53b) aufweist, der sich gerade erstreckt, und
wobei der gerade Abschnitt (53b) und der gekrümmte Abschnitt (53a) fließend miteinander verbunden sind.

2. Pulverisierungswalze (13) nach Anspruch 1,
wobei die Außenumfangsfläche des Walzenabschnitts (49) im Querschnitt bogenförmig ist, und
wobei sich der maximale Verschleißpunkt auf der Außenumfangsfläche in einem Winkel von 3 Grad bis 13 Grad relativ zu einer Mittellinie befindet, wobei die Mittellinie orthogonal zu der Rotationsmittelachse verläuft und durch die Mitte in eine Richtung verläuft, in die sich die Rotationsmittelachse erstreckt.

3. Pulverisierungswalze (13) nach Anspruch 1 oder 2,
wobei die Grenzfläche (53) einen Aussparungsabschnitt (53Cc) aufweist, der von der Außenumfangsfläche des Walzenabschnitts (49) abgewandt an dem maximalen Verschleißpunkt ausgespart ist, und
wobei der Aussparungsabschnitt (53Cc) und der gekrümmte Abschnitt (53a) fließend miteinander verbunden sind.

4. Pulverisierungswalze (13) nach einem der Ansprüche 1 bis 3,
wobei die Außenumfangsfläche des Walzenabschnitts (49) im Querschnitt bogenförmig ist, und
wobei der Krümmungsradius des gekrümmten Abschnitts 10 % oder mehr des Krümmungsradius der Außenumfangsfläche beträgt.

5. Vorrichtung zum Pulverisieren von festen Brennstoffen, umfassend:
die Pulverisierungswalze (13) nach einem der Ansprüche 1 bis 4;
einen Pulverisierungstisch (12), der so ausgelegt ist, dass er sich dreht und festen Brennstoff zwischen der Pulverisierungswalze (13) und dem Pulverisierungstisch (12) hält, um den festen Brennstoff zu pulverisieren, und
ein Gehäuse (11), in dem die Pulverisierungswalze (13) und der Pulverisierungstisch (12) untergebracht sind.

6. Verfahren zur Herstellung einer Pulverisierungswalze (13), die in einem Gehäuse (11) untergebracht ist und so ausgelegt ist, dass sie festen Brennstoff zwischen einem rotierenden Pulverisierungstisch (12) und der Pulverisierungswalze (13) hält, um den festen Brennstoff zu pulverisieren, wobei die Pulverisierungswalze (13) durch die Einwirkung einer Drehkraft seitens des Pulverisierungstischs (12) zur Drehung gezwungen wird, wobei die Pulverisierungswalze (13) Folgendes umfasst:
einen Stützabschnitt (48), der in Bezug auf das Gehäuse (11) drehbar gestützt ist, und
einen runden ringförmigen Walzenabschnitt (49), der an dem Stützabschnitt (48) befestigt und so ausgelegt ist, dass er festen Brennstoff zwischen dem Pulverisierungstisch (12) und dem Walzenabschnitt (49) pulverisiert,
wobei der Walzenabschnitt (49) einen an dem Stützabschnitt (48) befestigten Basisabschnitt (51) und einen an einer Außenumfangsfläche des Basisabschnitts (51) vorgesehenen Außenumfangsabschnitt (52) aufweist, aufweisend einen von dem Basisabschnitt (51) verschiedenen linearen Ausdehnungskoeffizienten und
aufweisend eine höhere Verschleißfestigkeit als der Basisabschnitt (51), und wobei eine Grenzfläche (35) zwischen dem Basisabschnitt (51) und dem Außenumfangsabschnitt (52) in einem Querschnitt entlang einer Ebene, die eine Erstreckungsrichtung einer Rotationsmittelachse des Walzenabschnitts (49) enthält, einen gekrümmten Abschnitt aufweist, der zu einer Außenumfangsfläche des Walzenabschnitts (49) hin vorspringend gekrümmt ist, und zwar auf einer Stirnflächenseite von einem maximalen Verschleißpunkt der Außenumfangsfläche des Walzenabschnitts (49) aus, wobei der maximale Verschleißpunkt der am wahrscheinlichsten verschleißende Punkt ist und die Stirnfläche eine von beiden Stirnflächen der Pulverisierungswalze ist und diejenige ist, die dem maximalen Verschleißpunkt näher liegt,
**dadurch gekennzeichnet, dass** die Grenzfläche (53) einen geraden Abschnitt (53b) aufweist, der sich gerade erstreckt, und
wobei der gerade Abschnitt (53b) und der gekrümmte Abschnitt (53a) fließend miteinander verbunden sind,
wobei das Herstellungsverfahren das einstückige Formen des Basisabschnitts (51) und des Außenumfangsabschnitts (52) durch Gießen umfasst.

## Revendications

1. Rouleau de pulvérisation (13) logé dans un boîtier (11) et configuré pour contenir du combustible solide entre une table de pulvérisation (12) rotative et le rouleau de pulvérisation (13) pour pulvériser le combustible solide, le rouleau de pulvérisation (13) étant forcé à effectuer une rotation en étant soumis à une force de rotation provenant de la table de pulvérisation (12), le rouleau de pulvérisation (13) comprenant :
une partie de support (48) supportée de manière rotative par rapport au boîtier (11) ; et
une partie de rouleau (49) annulaire circulaire fixée à la partie de support (48) et configurée pour pulvériser du combustible solide entre la table de pulvérisation (12) et la partie de rouleau (49),
la partie de rouleau (49) comportant une partie de base (51) fixée à la partie de support (48) et une partie circonférentielle extérieure (52) prévue sur une face circonférentielle extérieure de la partie de base (51), présentant un coefficient de dilatation linéaire différent de celui de la partie de base (51), et présentant une résistance à l'usure supérieure à celle de la partie de base (51), et une interface (53) entre la partie de base (51) et la partie circonférentielle extérieure (52) dans une section transversale prise le long d'un plan comprenant une direction dans laquelle s'étend un axe central de rotation (C2) de la partie de rouleau (49), comportant une partie courbe (53a) incurvée faisant saillie vers une face circonférentielle extérieure de la partie de rouleau (49) du côté de la face d'extrémité à partir d'un point d'usure maximal de la face circonférentielle extérieure de la partie de rouleau (49), le point d'usure maximal étant le plus susceptible de s'user, et la face d'extrémité étant l'une des deux faces d'extrémité du rouleau de pulvérisation (13) et étant la plus proche du point d'usure maximal,
**caractérisé en ce que** l'interface (53) comporte une partie rectiligne (53b) s'étendant en ligne droite, et
la partie rectiligne (53b) et la partie courbe (53a) étant reliées entre elles sans à-coups.

2. Rouleau de pulvérisation (13) selon la revendication 1,
la face circonférentielle extérieure de la partie de rouleau (49) présentant une section transversale arquée, et
le point d'usure maximal étant situé sur la face circonférentielle extérieure selon un angle compris entre 3 et 13 degrés par rapport à une ligne centrale, la ligne centrale étant orthogonale à l'axe central de rotation et passant par le centre dans une direction dans laquelle s'étend l'axe central de rotation.

3. Rouleau de pulvérisation (13) selon la revendication 1 ou 2,
l'interface (53) comportant une partie d'évidement (53Cc) évidée à l'opposé de la face circonférentielle extérieure de la partie de rouleau (49) au niveau du point d'usure maximal, et
la partie d'évidement (53Cc) et la partie courbe (53a) étant reliées entre elles sans à-coups.

4. Rouleau de pulvérisation (13) selon l'une quelconque des revendications 1 à 3,
la face circonférentielle extérieure de la partie de rouleau (49) présentant une section transversale arquée, et
le rayon de courbure de la partie courbe étant égal ou supérieur à 10 % du rayon de courbure de la face circonférentielle extérieure.

5. Dispositif de pulvérisation de combustible solide comprenant :
le rouleau de pulvérisation (13) selon l'une quelconque des revendications 1 à 4 ;
une table de pulvérisation (12) configurée pour effectuer une rotation et contenir du combustible solide entre le rouleau de pulvérisation (13) et la table de pulvérisation (12) pour pulvériser le combustible solide ; et
un boîtier (11) logeant le rouleau de pulvérisation (13) et la table de pulvérisation (12).

6. Procédé de fabrication d'un rouleau de pulvérisation (13) logé dans un boîtier (11) et configuré pour contenir du combustible solide entre une table de pulvérisation (12) rotative et le rouleau de pulvérisation (13) pour pulvériser le combustible solide, le rouleau de pulvérisation (13) étant forcé à effectuer une rotation en étant soumis à une force de rotation provenant de la table de pulvérisation (12), dans lequel le rouleau de pulvérisation (13) comprend
une partie de support (48) supportée de manière rotative par rapport au boîtier (11), et une partie de rouleau (49) annulaire circulaire fixée à la partie de support (48) et configurée pour pulvériser du combustible solide entre la table de pulvérisation (12) et la partie de rouleau (49),
la partie de rouleau (49) comportant une partie de base (51) fixée à la partie de support (48) et une partie circonférentielle extérieure (52) prévue sur une face circonférentielle extérieure de la partie de base (51), présentant un coefficient de dilatation linéaire différent de celui de la partie de base (51), et présentant une résistance à l'usure supérieure à celle de la partie de base (51), et une interface (35) entre la partie de base (51) et la partie circonférentielle extérieure (52) dans une section transversale prise le long d'un plan comprenant une direction dans laquelle s'étend un axe central de rotation de la partie de rouleau (49), comportant une partie courbe incurvée faisant saillie vers une face circonférentielle extérieure de la partie de rouleau (49) du côté de la face d'extrémité à partir d'un point d'usure maximal de la face circonférentielle extérieure de la partie de rouleau (49), le point d'usure maximal étant le plus susceptible de s'user, et la face d'extrémité étant l'une des deux faces d'extrémité du rouleau de pulvérisation et étant la plus proche du point d'usure maximal,
**caractérisé en ce que** l'interface (53) comporte une partie rectiligne (53b) s'étendant en ligne droite, et
la partie rectiligne (53b) et la partie courbe (53a) étant reliées entre elles sans à-coups, le procédé de fabrication comprenant le moulage d'un seul tenant de la partie de base (51) et de la partie circonférentielle extérieure (52) par coulée.
